# EUROPÄISCHE PATENTANMELDUNG

(11) **EP 4 603 432 A1**
(43) Veröffentlichungstag der Anmeldung: **20.08.2025**
(21) Anmeldenummer: 24210145.9
(22) Anmeldetag: 31.10.2024
(51) Int. Cl.: B65G 54/02, B61B 13/04

(54) **TRANSPORTSYSTEM**

(30) Priorität: 14.02.2024 DE 102024104076
(71) Anmelder: Weiss GmbH, 74722 Buchen (Odw.) (DE)
(72) Erfinder: Götzinger, Martin, 74722 Buchen (DE); Neuweiler, Lutz, 68535 Edingen-Neckarhausen (DE)
(74) Vertreter: Manitz Finsterwald Patent- und Rechtsanwaltspartnerschaft mbB

(57) **Zusammenfassung**

Ein Transportsystem zum Transport von Objekten umfasst zumindest eine Transportschiene, die zumindest eine erste Lauffläche, zumindest eine zweite Lauffläche und zumindest eine dritte Lauffläche umfasst, wobei die erste Lauffläche und die zweite Lauffläche einander gegenüberliegend angeordnet sind, wobei sich die dritte Lauffläche senkrecht zu und zwischen der ersten und der zweiten Lauffläche erstreckt und eine Flächennormale der dritten Lauffläche eine axiale Richtung definiert. Das Transportsystem umfasst des Weiteren zumindest einen Transportwagen. Der Transportwagen umfasst einen Grundkörper, der mit einem Objektträger zur Aufnahme zumindest eines zu transportierenden Objekts gekoppelt oder koppelbar ist. Der Transportwagen umfasst des Weiteren zumindest eine Laufrolleneinheit mit zumindest einer um eine erste Drehachse drehbar gelagerten ersten Laufrolle, zumindest einer um eine zweite Drehachse drehbar gelagerten zweiten Laufrolle und zumindest einer um eine dritte Drehachse drehbar gelagerten dritten Laufrolle. Die erste und die zweite Laufrolle sind derart an dem Grundkörper angeordnet, dass die erste und die zweite Drehachse relativ zu dem Grundkörper ortsfest sind und dass sie mit der ersten Lauffläche zusammenwirken. Die dritte Laufrolle ist derart an dem Grundkörper angeordnet, dass sie mit der zweiten Lauffläche zusammenwirkt. Der Transportwagen umfasst ferner zumindest eine Lenkrolleneinheit mit zumindest einer Lenkrolle und zumindest einem Schwenkabschnitt. Der Schwenkabschnitt ist an dem Grundkörper drehbar um eine Schwenkachse gelagert. Die Lenkrolle ist an dem Schwenkabschnitt drehbar um eine Lenkrollenachse gelagert und wirkt mit der dritten Lauffläche zusammen. Die Lenkrollenachse und die Schwenkachse kreuzen oder schneiden sich nicht.

## Beschreibung

Die Erfindung betrifft ein Transportsystem zum Transport von Objekten.

Transportwagen und entsprechende Transportsysteme werden beispielsweise in der Automatisierungstechnik verwendet, um Objekte von einem Ort zu einem anderen Ort zu transportieren, beispielsweise von einem Fertigungsschritt zum nächsten. Hierzu werden die Objekte auf Transportwagen positioniert und die Transportwagen werden entlang einer Schiene verfahren. Die Schiene kann dabei geradlinige und/oder gekrümmte Abschnitte aufweisen und eine in sich geschlossene oder offene Transportstrecke definieren.

In der Praxis wird besonders auf die Kurvengängigkeit des Systems Wert gelegt, da nicht kurvengängige Systeme diskontinuierlich arbeiten und ihre Taktraten limitiert sind. Des Weiteren sollten die Schienensysteme zugleich eine hohe Tragfähigkeit sowie eine gute Profilgenauigkeit aufweisen, um sowohl hohe Lasten transportieren zu können als auch eine hohe Genauigkeit in der Positionierung der Transportwagen und geringe Geräuschentwicklung beim Transport zu gewährleisten. Insbesondere soll eine möglichst hohe Positioniergenauigkeit quer zur Fahrtrichtung des Transportwangens auf der Schiene gewährleistet werden.

Von wesentlicher Bedeutung ist es außerdem, dass die Transportwagen bzw. die Transportsysteme zuverlässig arbeiten und dennoch kostengünstig in der Herstellung und der Montage sind. Insbesondere soll möglichst wenig Verschleiß an den Transportwagen auftreten, beispielsweise an den Rollen der Transportwagen.

In vielen Systemen weist die Transportschiene einen oder mehrere geradlinige Transportabschnitte und einen oder mehrere Kurvenabschnitte auf, welche bevorzugt einen konstanten Radius aufweisen. In einem Übergang von einem geradlinigen Transportabschnitt in einen Kurvenabschnitt kann die Transportschiene einen Verlauf aufweisen, der durch eine oder mehrere Funktionen (z. B. Polynome) beschrieben wird, die im Rahmen aufwendiger Optimierungsprozesse berechnet werden. Der geradlinige Transportabschnitt kann aber auch direkt in den Kurvenabschnitt übergehen. Die beiden Seiten der Schiene können durch unterschiedliche Funktionen beschrieben werden, so dass deren Verlauf nicht notwendigerweise parallel ist.

Das Durchfahren von Kurvenabschnitten stellt für herkömmliche Transportwagen jedoch eine besondere Herausforderung dar. Ein bekannter Typ eines Transportwagens umfasst beispielsweise eine oder mehrere um eine Schwenkachse verschwenkbare Laufrollenträger mit Laufrollen, die mit seitlichen Laufflächen der Transportschiene zusammenwirken, und einer lastaufnehmenden Laufrolle, die mit einer oberen Lauffläche der Transportschiene zusammenwirkt. Diese Variante bietet zwar den Vorteil, dass sich die Laufrollen entlang der Transportschiene während der Kurvenfahrt ausrichten können, ist jedoch recht aufwendig und wartungsintensiv, da vergleichsweise viele bewegliche Teile zum Einsatz kommen. Insbesondere hat sich diese Variante in so manchen Anwendungen als weniger vorteilhaft in Bezug auf die Positioniergenauigkeit und Steifigkeit des Transportwagens quer zur Transportrichtung erwiesen.

Es ist daher die Aufgabe der Erfindung ein Transportsystem bereitzustellen, das alle der oben genannten Anforderungen erfüllt.

Die Aufgabe wird durch ein Transportsystem gemäß Anspruch 1 gelöst.

Ein erfindungsgemäßes Transportsystem zum Transport von Objekten umfasst zumindest eine Transportschiene, die zumindest eine erste Lauffläche, zumindest eine zweite Lauffläche und zumindest eine dritte Lauffläche umfasst. Die erste Lauffläche und die zweite Lauffläche sind einander gegenüberliegend angeordnet. Die dritte Lauffläche erstreckt sich senkrecht zu und zwischen der ersten und der zweiten Lauffläche. Eine Flächennormale der dritten Lauffläche definiert eine axiale Richtung.

Die erste Lauffläche, die zweite Lauffläche und/oder die dritte Lauffläche sind bevorzugt eben ausgestaltet.

Das Transportsystem umfasst des Weiteren zumindest einen Transportwagen. Der Transportwagen umfasst einen Grundkörper, der mit einem Objektträger zur Aufnahme zumindest eines zu transportierenden Objekts gekoppelt oder koppelbar ist. Der Objektträger kann auch integral mit dem Grundkörper ausgebildet sein.

In der Regel sind mehrere Transportwagen vorgesehen, die bevorzugt individuell ansteuerbar sind, sodass sie unabhängig voneinander entlang der Transportschiene bewegt werden können.

Der Transportwagen umfasst ferner zumindest eine Laufrolleneinheit mit zumindest einer um eine erste Drehachse drehbar gelagerten ersten Laufrolle, zumindest einer um eine zweite Drehachse drehbar gelagerten zweiten Laufrolle und zumindest einer um eine dritte Drehachse drehbar gelagerten dritten Laufrolle. Die erste und die zweite Laufrolle sind derart an dem Grundkörper angeordnet, dass die erste und die zweite Drehachse relativ zu dem Grundkörper ortsfest sind und dass sie mit der ersten Lauffläche zusammenwirken. Es ist denkbar, dass weitere ortsfeste Laufrollen vorgesehen sind.

Die dritte Laufrolle ist derart an dem Grundkörper angeordnet, dass sie mit der zweiten Lauffläche zusammenwirkt. Die dritte Laufrolle kann ebenfalls relativ zu dem Grundkörper ortsfest sein. Sie kann aber auch auslenkbar an dem Grundkörper gelagert sein.

Vorzugsweise umgreifen dann die erste, die zweite und die dritte Laufrolle gemeinsam die Transportschiene zumindest teilweise. Es ist dabei unwesentlich, von welcher Raumrichtung aus betrachtet die Laufrollen die Transportschiene (teilweise) umgreifen. Prinzipiell wäre es auch denkbar, dass die Laufrollen innerhalb der Transportschiene angeordnet sind. Beispielsweise weist die Schiene im Querschnitt die Form eines U auf.

Der Transportwagen umfasst zudem zumindest eine Lenkrolleneinheit mit zumindest einer Lenkrolle und zumindest einem Schwenkabschnitt, wobei der Schwenkabschnitt an dem Grundkörper drehbar um eine Schwenkachse gelagert ist. Die Lenkrolle ist an dem Schwenkabschnitt drehbar um eine Lenkrollenachse gelagert und wirkt mit der dritten Lauffläche zusammen. Je nach Bedarf kann der Transportwagen auch mehrere Lenkrolleneinheiten aufweisen. Es ist auch dankbar, dass eine Lenkrolleneinheit mehrere Lenkrollen an jeweiligen Schwenkabschnitten aufweist.

Die Lenkrollenachse und die Schwenkachse kreuzen oder schneiden sich nicht. Mit anderen Worten ist die Lenkrolle exzentrisch gelagert, sodass sie sich in Transportrichtung ausrichtet und "nachläuft". Mit der exzentrischen Lagerung ist gemeint, dass die Lenkrollenachse in einer Richtung quer zur Transportrichtung betrachtet seitlich versetzt in Bezug auf die Schwenkachse angeordnet ist.

Dadurch richtet sich die Lenkrolle bei Kurvenfahrten automatisch aus, sodass sie auf der dritten Lauffläche zuverlässig abrollt und nicht über diese rutscht oder schleift. Dies wiederum verringert den Verschleiß am Transportwagen, was das Transportsystem insgesamt wartungsfreundlicher und wirtschaftlicher macht. Zudem tritt weniger bis gar kein Schlupf an den Rollen des Transportwagens auf und der Transportwagen kann vergleichsweise große Lasten tragen.

Des Weiteren bietet die erfindungsgemäße Ausgestaltung im Vergleich zu dem bekannten Transportwagen mit Laufrollenträger unter anderem den Vorteil, dass die seitlichen Laufrollen und die obere, lastaufnehmende Rolle baulich getrennt an dem Grundkörper angeordnet werden können. Dadurch kann der Aufbau des Transportwagens insgesamt stark vereinfacht werden, und zwar bei gleichzeitig erheblich verbesserter Positioniergenauigkeit und Lastfähigkeit. Insbesondere können zumindest einige der seitlichen Laufrollen ortsfest an dem Grundkörper gelagert werden, während die lastaufnehmende Lenkrolle separat und verschwenkbar an dem Grundkörper angeordnet werden kann, was die benötige Anzahl an beweglichen Teilen erheblich reduziert. Gleichzeitig wird jedoch durch die spezielle Anordnung der Laufrollen eine nach wie vor hervorragende Kurvengängigkeit des Transportwagens gewährleistet.

Grundsätzlich können die Anzahl der Laufrollen (jedoch mindestens 3) und die Anzahl an Lenkrollen (jedoch mindestens eine) bedarfsgerecht gewählt werden, beispielsweise um die bei Betrieb des Systems auftretenden Belastungen zuverlässig aufnehmen zu können und gleichzeitig eine hochpräzise Positionierung des Transportwagens zu gewährleisten.

Der Antrieb des Transportwagens entlang der Transportschiene kann beispielsweise mechanisch, zum Beispiel mittels eines Bandantriebs oder Kurvenzylinderantriebs oder dergleichen, und/oder elektromagnetisch, zum Beispiel mittels eines Linearmotors, erfolgen. Derartige Antriebe sind grundsätzlich bekannt.

Weitere Ausführungsformen der Erfindung sind in den Ansprüchen, der Beschreibung und den beigefügten Zeichnungen angegeben.

Gemäß einer Ausführungsform steht die Lenkrollenachse senkrecht zu der Schwenkachse. Das heißt in der Transportrichtung gesehen bilden die Lenkrollenachse und die Schwenkachse einen rechten Winkel.

Gemäß einer Ausführungsform ist die Schwenkachse in einer Gebrauchslage des Transportwagens parallel zu der axialen Richtung angeordnet. Insbesondere ist die dritte Lauffläche in einer Gebrauchslage des Transportwagens die obere Lauffläche der Transportschiene, sodass im Wesentlichen die gesamte Gewichtslast von der Lenkrolle aufgenommen bzw. getragen wird. Dies hat den Vorteil, dass der erfindungsgemäße Transportwagen vergleichsweise große Lasten aufnehmen kann, ohne dass sich dies negativ auf die Positioniergenauigkeit und die Taktrate des Transportwagens auswirkt, da im Wesentlichen keine Gewichtslast auf die Laufrollen wirkt.

Gemäß einer Ausführungsform steht die Lenkrollenachse senkrecht zu der ersten, der zweiten und/oder der dritten Drehachse. Es ist jedoch auch eine Ausführungsform denkbar, bei der die Lenkrollenachse schräg in Bezug auf die erste, zweite und/oder dritte Drehachse angeordnet ist.

Gemäß einer Ausführungsform ist die erste, die zweite und/oder die dritte Drehachse parallel zu der axialen Richtung angeordnet.

Gemäß einer Ausführungsform ist die dritte Laufrolle derart an dem Grundkörper angeordnet, dass die dritte Drehachse relativ zu dem Grundkörper ortsfest ist.

Gemäß einer Ausführungsform ist die dritte Laufrolle derart an dem Grundkörper angeordnet, dass die dritte Drehachse relativ zu dem Grundkörper auslenkbar ist, insbesondere in einer Richtung senkrecht zu der axialen Richtung und senkrecht zu einer Transportrichtung des Transportwagens. Die dritte Laufrolle kann beispielsweise an einem Schwenkarm mit einem Scharnier oder an einem Ausleger mit einem Festkörpergelenk oder dergleichen angeordnet sein. Dadurch kann die Kurvengängigkeit des Transportwagens verbessert werden, und es können Fertigungstoleranzen effizient kompensiert werden.

Die Laufrolleneinheit kann zwei dritte Laufrollen umfassen, die um jeweilige dritte Drehachsen drehbar an dem Grundkörper gelagert sind und mit der dritten Lauffläche zusammenwirken. Die dritten Laufrollen können ortsfest oder auslenkbar an dem Grundkörper angeordnet sein.

Grundsätzlich ist es auch denkbar, dass fünf oder mehr Laufrollen vorgesehen sind. Die bedarfsgerechte Wahl der Anzahl der Laufrollen hängt vom jeweils vorliegenden Anforderungsprofil ab, beispielsweise von der Größe der Transportwagens und/oder von dessen Belastung.

Gemäß einer Ausführungsform mit vier Laufrollen bilden die erste, die zweite und die zwei dritten Drehachsen in der axialen Richtung gesehen ein Trapez, insbesondere ein gleichschenkliges Trapez. Ein Abstand zwischen den zwei dritten Laufrollen kann kleiner als ein Abstand zwischen der ersten Laufrolle und der zweiten Laufrolle sein. Dadurch kann eine besonders gute Kurvengängigkeit des Transportwagens sichergestellt werden. Bevorzugt sind die Abstände zwischen den Drehachsen in der Transportrichtung größer als in der Querrichtung, was für eine besonders schlanker Form des Transportsystems und mehr Stabilität sorgt.

Gemäß einer Ausführungsform umfasst der Transportwagen zwei in Transportrichtung zueinander beabstandet angeordnete Lenkrolleneinheiten, die jeweils eine Lenkrolle und jeweils einen Schwenkabschnitt umfassen, wobei jeder der zwei Schwenkabschnitte drehbar um eine jeweilige Schwenkachse an dem Grundkörper gelagert ist und jede der zwei Lenkrollen drehbar um eine jeweilige Lenkrollenachse an dem jeweiligen Schwenkabschnitt gelagert ist, wobei sich die jeweiligen Lenkrollenachsen und Schwenkachsen nicht kreuzen oder schneiden. Insbesondere ist ein Abstand zwischen den beiden Schwenkachsen der beiden Schwenkabschnitte größer ist als ein Abstand zwischen der ersten Drehachse und der zweiten Drehachse. Dadurch wird eine bessere Stabilität gegen eine Verkippung des Transportwagens in der Transportrichtung erzielt.

Gemäß einer Ausführungsform umfasst das Transportsystem ferner einen Trägerabschnitt, der sich von dem Grundkörper in der axialen Richtung erstreckt. Der Trägerabschnitt und der Grundkörper können einstückig ausgebildet sein oder separate Bauteile sein.

Gemäß einer Ausführungsform umfasst der Transportwagen zusätzlich zu der zumindest einen an dem Grundkörper angeordneten Laufrolleneinheit (grundkörperseitige Laufrolleneinheit) zumindest eine an dem Trägerabschnitt angeordnete Laufrolleneinheit, wobei erste und zweite Laufrollen der an dem Trägerabschnitt angeordneten Laufrolleneinheit (trägerseitige Laufrolleneinheit) mit ersten und zweiten Laufflächen einer zweiten Transportschiene des Transportsystems zusammenwirken.

Gemäß einer Ausführungsform ist die trägerseitige Laufrolleneinheit entsprechend der grundkörperseitigen Laufrolleneinheit ausgebildet oder umfasst beispielsweise mehr oder weniger und/oder geometrisch anders angeordnete Laufrollen.

Gemäß einer Ausführungsform ist die trägerseitige Laufrolleneinheit axial mittig unter der grundkörperseitigen Laufrolleneinheit angeordnet. Beispielsweise fluchten die Drehachsen der Laufrollen der an dem Träger angeordneten Laufrolleneinheit mit den Drehachsen der Laufrollen der an dem Grundkörper angeordneten Laufrolleneinheit.

Gemäß einer Ausführungsform ist die trägerseitige Laufrolleneinheit in Bezug auf die grundkörperseitige Laufrolleneinheit in Transportrichtung versetzt angeordnet. Beispielsweise kann eine trägerseitige Laufrolleneinheit in Transportrichtung bevorzugt äquidistant zwischen zwei grundkörperseitigen Laufrolleneinheiten angeordnet sein. Alternativ kann auch eine grundkörperseitige Laufrolleneinheit in Transportrichtung bevorzugt äquidistant zwischen zwei trägerseitigen Laufrolleneinheiten angeordnet sein. Es ist aber auch denkbar, dass genau eine an dem Grundkörper angeordnete Laufrolleneinheit in Transportrichtung vor oder hinter genau einer an dem Träger angeordneten Laufrolleneinheit angeordnet ist. Dabei können sich die grundkörperseitige Laufrolleneinheit und die trägerseitige Laufrolleneinheit in axialer Richtung gesehen zumindest teilweise überlappen oder nicht überlappen.

Gemäß einer Ausführungsform ist die zweite Transportschiene wie die erste Transportschiene ausgebildet, d.h. die zweite Transportschiene kann entsprechenden erste, zweite und dritte Laufflächen aufweisen. Es ist aber auch denkbar, dass die zweite Transportschiene anders dimensioniert ist, als die erste Transportschiene.

Gemäß einer Ausführungsform ist die zweite Transportschiene in axial mittig unter der ersten Transportschiene angeordnet.

Gemäß einer Ausführungsform umfasst der Transportwagen zusätzlich zu der zumindest einen an dem Grundkörper angeordneten Lenkrolleneinheit grundkörperseitige Lenkrolleneinheit) zumindest eine an dem Trägerabschnitt angeordnete Lenkrolleneinheit (trägerseitige Lenkrolleneinheit). Die Lenkrolleneinheit kann mit einer zweiten Transportschiene zusammenwirken, insbesondere mit der vorstehend beschriebenen zweiten Transportschiene, die mit Laufrollen einer trägerseitige Laufrolleneinheit in Kontakt stehen.

Gemäß einer Ausführungsform wirkt die Lenkrolle der an dem Trägerabschnitt angeordneten Lenkrolleneinheit mit einer der dritten Lauffläche gegenüberliegenden, vierten Lauffläche der ersten Transportschiene des Transportsystems zusammen, wobei die vierte Lauffläche der ersten Transportschiene in Gebrauchslage des Transportwagens eine untere der Laufflächen der ersten Transportschiene ist.

Gemäß einer Ausführungsform wirkt die Lenkrolle der an dem Trägerabschnitt angeordneten Lenkrolleneinheit mit einer dritten Lauffläche der zweiten Transportschiene des Transportsystems zusammen, wobei die dritte Lauffläche der zweiten Transportschiene in Gebrauchslage des Transportwagens eine obere der Laufflächen der zweiten Transportschiene ist. Dadurch wird eine bessere Lastverteilung erzielt.

Gemäß einer Ausführungsform wirkt die Lenkrolle der an dem Trägerabschnitt angeordneten Lenkrolleneinheit mit einer der dritten Lauffläche der zweiten Transportschiene gegenüberliegenden, vierten Lauffläche der zweiten Transportschiene des Transportsystems zusammen, wobei die vierte Lauffläche der zweiten Transportschiene in Gebrauchslage des Transportwagens eine untere der Laufflächen der zweiten Transportschiene ist.

Gemäß einer Ausführungsform ist die Lenkrolle der grundkörperseitigen Lenkrolleneinheit, die mit der dritten Lauffläche der ersten Transportschiene zusammenwirkt, in Bezug auf die Lenkrolle der trägerseitigen Lenkrolleneinheit, die mit der vierten Lauffläche der ersten Transportschiene zusammenwirkt, vorgespannt. L Alternativ oder zusätzlich ist die trägerseitige Lenkrolleneinheit vorgespannt.

Durch die Vorspannung der Lenkrolleneinheit wird ein besonders gleichmäßiger, stabiler und reibungsarmer Betrieb des Transportwagens gewährleistet. Die Vorspannung kann durch zumindest ein elastisches Element bereitgestellt werden, die die Lenkrolleneinheit oder die Lenkrolle in oder parallel zu der Richtung der Schwenkachse gegen die entsprechende dritte oder vierte Lauffläche drückt.

Gemäß einer Ausführungsform ist die trägerseitige Lenkrolleneinheit axial mittig unter der grundkörperseitigen Lenkrolleneinheit angeordnet, das heißt die Schwenkachse der Lenkrolle der grundkörperseitigen Lenkrolleneinheit fluchtet mit der Schwenkachse der Lenkrolle der trägerseitigen Lenkrolleneinheit.

Gemäß einer Ausführungsform ist die trägerseitige Lenkrolleneinheit in Bezug auf die grundkörperseitige Lenkrolleneinheit in Transportrichtung versetzt angeordnet. Beispielsweise kann eine trägerseitige Lenkrolleneinheit in Transportrichtung bevorzugt äquidistant zwischen zwei grundkörperseitigen Lenkrolleneinheiten angeordnet sein. Alternativ kann auch eine grundkörperseitige Lenkrolleneinheit in Transportrichtung bevorzugt äquidistant zwischen zwei trägerseitigen Lenkrolleneinheiten angeordnet sein. Es ist aber auch denkbar, dass genau eine an dem Grundkörper angeordnete Lenkrolleneinheit in Transportrichtung vor oder hinter genau einer an dem Träger angeordneten Lenkrolleneinheit angeordnet ist. Dabei können sich die grundkörperseitige Lenkrolleneinheit und die trägerseitige Lenkrolleneinheit in axialer Richtung gesehen zumindest teilweise überlappen oder nicht überlappen.

Gemäß einer Ausführungsform ist die trägerseitige Lenkrolleneinheit entsprechend der grundkörperseitigen Lenkrolleneinheit ausgebildet oder umfasst mehr oder weniger und/oder (eine) geometrisch anders angeordnete.

### Lenkrolle(n).

Gemäß einer Ausführungsform ist an dem Trägerabschnitt zumindest ein Führungselement angeordnet, das mit einer vierten Lauffläche der Transportschiene zusammenwirkt, insbesondere wobei die vierte Lauffläche der dritten Lauffläche gegenüberliegt. Es ist aber auch denkbar, dass eine separate Transportschiene für die vierte Lauffläche vorgesehen ist.

Gemäß einer Ausführungsform ist das Führungselement derart an dem Trägerabschnitt angeordnet, dass das Führungselement mit einer Vorspannung an die vierte Lauffläche gedrückt wird. Das Führungselement wirkt daher wie eine Art Gegendruckelement für die Lenkrolle(n).

Gemäß einer Ausführungsform ist das Führungselement in der axialen Richtung gesehen mittig zwischen den zwei Schwenkachsen der zwei Lenkrolleneinheiten angeordnet ist. Dadurch wird die Spannkraft gleichmäßig auf die Lenkrollen verteilt.

Gemäß einer Ausführungsform ist das Führungselement eine drehbar an dem Trägerabschnitt gelagerte Rolle, wobei eine Rotationsachse der Rolle parallel zu der Lenkrollenachse angeordnet ist. Dadurch wirkt das Führungselement besonders reibungsarm mit der vierten Lauffläche zusammen, was zu besonders wenig Abrieb am Führungselement führt. Dies wiederum macht das Transportsystem energieeffizienter, da weniger Antriebsenergie benötigt wird. Das Führungselement kann aber auch als ein Führungsschlitten oder ähnliches ausgestaltet sein, der möglichst reibungsarm entlang der vierten Lauffläche gleiten kann.

Gemäß einer Ausführungsform weist die Transportschiene in Transportrichtung gesehen eine rechteckige Querschnittsform auf. Insbesondere weisen die Laufflächen der Laufrollen und/oder die Lauffläche(n) der Lenkrolle(n) keine V-Form auf und/oder die Laufflächen der Transportschiene keine Keilform auf. Es ist aber auch eine Konfiguration denkbar, in der nur die Lauffläche der Lenkrolle eine V-Form aufweist und die dritte Lauffläche der Transportschiene eine Keilform aufweist.

Die Erfindung wird nachfolgend rein beispielhaft anhand vorteilhafter Ausführungsformen unter Bezugnahme auf die Figuren näher erläutert. In diesen zeigen:
- Fig. 1A:: eine vereinfachte Seitenansicht eines Ausschnitts eines Transportsystems,
- Fig. 1B:: eine Draufsicht auf das Transportsystem von Fig. 1A,
- Fig. 2:: eine vereinfachte Perspektivenansicht eines Transportwagens,
- Fig. 3:: eine weitere Perspektivenansicht des Transportwagens,
- Fig. 4:: eine Seitenansicht des Transportwagens,
- Fig. 5A:: eine Draufsicht auf den Transportwagen,
- Fig. 5B:: eine schematische Darstellung der Anordnung der Drehachsen der Laufrollen,
- Fig. 6A:: eine Schnittansicht des Grundkörpers des Transportwagens entlang der in Fig. 5A eingezeichneten Schnittlinie A-A,
- Fig. 6B:: eine vergrößerte Darstellung eines Teils einer Lenkrolleneinheit, und
- Fig. 6C:: eine vereinfachte Draufsicht eines Ausschnitts des Transportsystems von Fig. 1A in einem horizontalen Schnitt durch den Transportwagen.

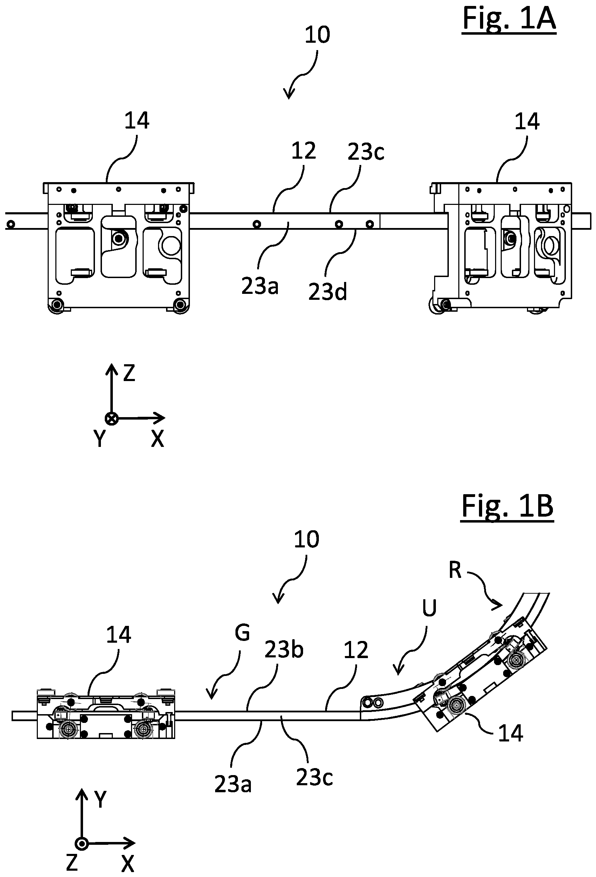

Das in den Fig. 1A und 1B dargestellte Transportsystem 10 weist eine Transportschiene 12 mit zwei seitlichen Laufflächen 23a, 23b, einer oberen Lauffläche 23c und einer unteren Lauffläche 23d auf, entlang derer ein oder mehrere Transportwagen 14 in einer Transportrichtung X verfahren werden können. Das Koordinatensystem bezieht sich auf den Transportwagen 14.

Der Einfachheit halber wird das System 10 nur teilweise dargestellt. Für das Verständnis der vorliegenden Erfindung nicht erforderliche Bestandteile wurden weggelassen. Die erste Lauffläche 23a und die zweite Lauffläche 23b sind einander gegenüberliegend angeordnet. Gleiches gilt für die dritte und vierte Lauffläche 23c, 23d. Die dritte Lauffläche 23c erstreckt sich senkrecht zu und zwischen der ersten und der zweiten Lauffläche 23a, 23b. Die Transportschiene 12 weist in der Transportrichtung X gesehen eine rechteckige Querschnittsform auf.

Eine Flächennormale der dritten Lauffläche 23c definiert eine axiale Richtung Z. Unter einer Querrichtung Y ist eine Richtung zu verstehen, die senkrecht zu der axialen Richtung Z und senkrecht zu einer Transportrichtung X des Transportwagens 14 entlang der Transportschiene 12 angeordnet ist.

Der Antrieb des Transportwagens 14 entlang der Transportschiene 12 kann beispielsweise mechanisch (z. B. mittels eines Bandantriebs und/oder Kurvenzylinderantriebs o.ä.) und/oder elektromagnetisch (z. B. mittels eines Linearmotors o.ä.) erfolgen.

Wie in der in Fig. 1B gezeigten Draufsicht auf das Transportsystem 10 zu sehen ist, weist das Transportsystem 10 im vorliegenden Ausführungsbeispiel einen Abschnitt G mit einem geradlinigen Transportweg auf, der über einen Übergangsabschnitt U in einen Kurvenabschnitt R übergeht, der einen konstanten Krümmungsradius aufweist. Es versteht sich, dass abweichend von dem dargestellten Beispiel Transportschienen mit beliebiger Streckenführung realisiert werden können. Zudem versteht es sich, dass die Transportschiene 12 eine in sich geschlossene Bahn definieren kann.

Entlang des durch die Transportschiene 12 festgelegten Transportweges können beispielsweise Bearbeitungsstationen vorgesehen sein, an denen auf den Transportwagen 14 angeordnete Werkstücke bearbeitet werden können. Der Aufbau der Schiene 12 kann modular sein, sodass einzelne Module mit bestimmten Längen und/oder bestimmten Krümmungsradien auf einfache Weise miteinander kombiniert werden können, um ein Transportsystem 10 mit der gewünschten Konfiguration zu erhalten.

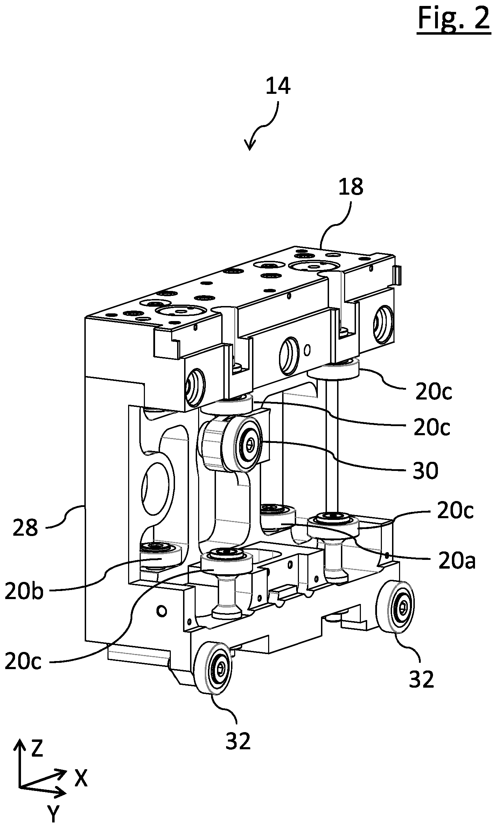

Fig. 2 zeigt eine perspektivische Ansicht eines Transportwagens 14. Der Einfachheit halber sind auch hier Bestandteile des Transportwagens 14, die für den Erfindungsgedanken unwesentlich sind, nicht dargestellt. Im gezeigten Ausführungsbeispiel erfolgt der Antrieb des Transportwagens 14 zumindest abschnittsweise durch einen nicht gezeigten Kurvenzylinderantrieb, bei dem Antriebsrollen 32 des Transportwagens 14 in spiralförmige Nuten einer nicht gezeigten Transportwalze eingreifen, die sich um ihre Längsachse dreht, um den Transportwagen 14 entlang der Transportrichtung X zu bewegen. Derartige Antriebe sind grundsätzlich bekannt und zeichnen sich durch eine besonders große Zuverlässigkeit und Präzision aus. Es versteht sich, dass der Transportwagen 14 aber auch durch andere Antriebsmittel angetrieben werden kann, beispielsweise mittels eines Bandantriebs und/oder Linearmotors.

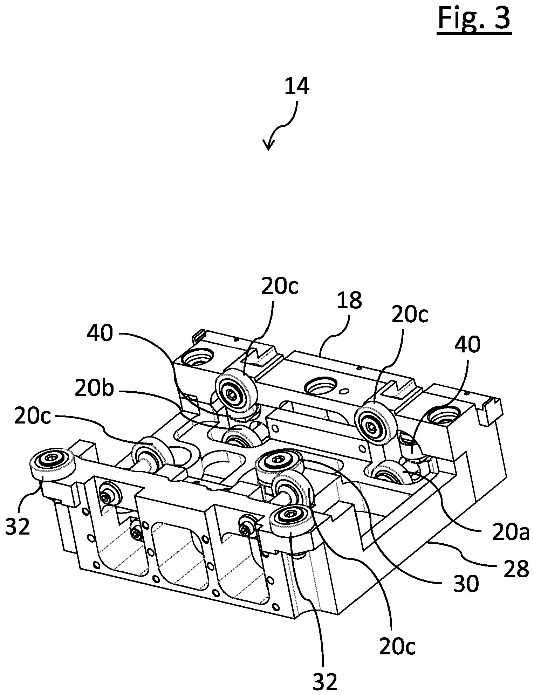

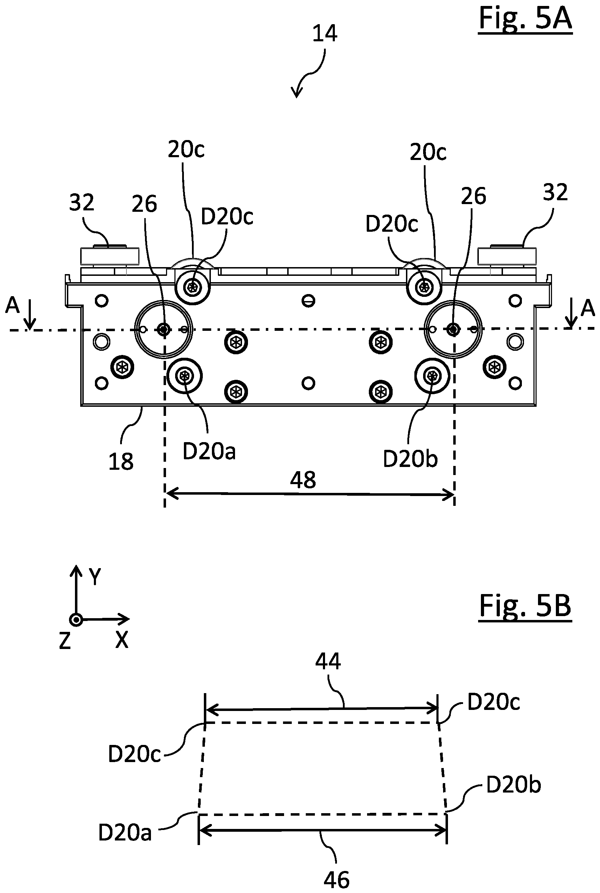

Wie in der weiteren, in Fig. 3 gezeigten perspektivischen Ansicht des Transportwagens 14 gut zu erkennen ist, umfasst der Transportwagen 14 einen (mehrstückigen) Grundkörper 18, an dem eine erste Laufrolle 20a und eine zweite Laufrolle 20b gelagert sind. Sie sind relativ zu dem Grundkörper 18 räumlich fixiert und wirken mit der an einer Seite der Transportschiene 12 angeordneten Lauffläche 23a zusammen (sieh Fig. 1A, 1B). Die erste Laufrolle 20a ist um eine erste Drehachse D20a drehbar an dem Grundkörper 18 gelagert und die zweite Laufrolle 20b ist um eine zweite Drehachse D20b drehbar an dem Grundkörper 18 gelagert (siehe Fig. 5A). Die erste und zweite Drehachse D20a, D20b sind parallel zueinander und parallel zu der axialen Richtung Z angeordnet. Es versteht sich, dass mehr als zwei Laufrollen mit der Lauffläche 23a der Transportschiene 12 zusammenwirken können.

An dem Grundkörper 18 sind des Weiteren zwei dritte Laufrollen 20c gelagert. Eben diese sind ebenfalls relativ zu dem Grundkörper 18 räumlich fixiert und wirken mit der an der gegenüberliegenden Seite der Transportschiene 12 angeordneten Lauffläche 23b zusammen (sieh Fig. 1A, 1B). Die dritten Laufrollen 20c sind um jeweilige dritte Drehachsen D20c drehbar an dem Grundkörper 18 gelagert (sieh Fig. 5A). Die dritten Drehachsen D20c sind parallel zueinander und parallel zur axialen Richtung Z angeordnet. Es versteht sich, dass auch nur eine dritte Laufrolle 20c vorgesehen sein kann, oder mehr als zwei, beispielsweise drei.

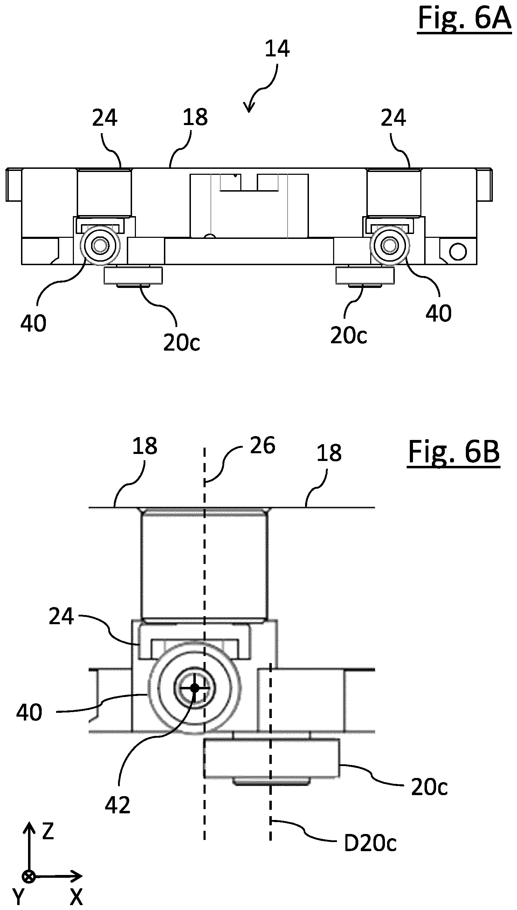

Damit sich der Transportwagen 14 präzise und leichtgängig entlang der Transportschiene 12 fortbewegen kann, weist der Grundkörper 18 ferner zwei Lenkrollen 40 auf. Die Anordnung und Funktion der Lenkrollen 40 wird nachfolgend näher anhand der Fig. 6A bis 6C beschrieben.

Der Transportwagen 14 umfasst einen (optionalen) Trägerabschnitt 28, der sich von dem Grundkörper 18 in der axialen Richtung Z in Gebrauchslage nach unten erstreckt. In dem gezeigten Ausführungsbeispiel sind der Trägerabschnitt 28 und der Grundkörper 18 separate Bauteile. Der Trägerabschnitt 28 und der Grundkörper 18 können aber auch einstückig ausgebildet sein.

An einem dem Grundkörper 18 gegenüberliegenden Abschnitt des Trägerabschnitts 28 sind eine zusätzliche erste Laufrolle 20a und eine zusätzliche zweite Laufrolle 20b gelagert. Sie sind relativ zu dem Trägerabschnitt 28 räumlich fixiert und wirken mit einer ersten Lauffläche einer zweiten, nicht gezeigten Transportschiene des Transportsystems 10 zusammen. An dem Trägerabschnitts 28 sind des Weiteren zwei zusätzliche dritte Laufrollen 20c gelagert. Eben diese sind ebenfalls relativ zu dem Trägerabschnitt 28 räumlich fixiert und wirken mit einer zweiten Lauffläche der zweiten, nicht gezeigten Transportschiene des Transportsystems 10 zusammen, wobei die erste Lauffläche der zweiten gegenüberliegt.

Die unteren ersten Laufrollen 20a, die an dem Trägerabschnitt 28 angeordnet sind, liegen den oberen, an dem Grundkörper 18 angeordneten ersten Laufrollen 20a gegenüber, das heißt die jeweiligen ersten Drehachsen D20a fluchten in der axialen Richtung Z. Gleiches gilt für die Drehachsen D20b, D20c der zweiten und dritten Laufrollen 20b, 20c. Je nach Bedarf können die unteren und oberen Laufrollen jedoch auch in Transportrichtung X versetzt zueinander angeordnet sein.

Dadurch, dass nicht nur die oberen, an dem Grundkörper 18 angeordneten Laufrollen 20a, 20b, 20c, sondern auch die unteren, an dem Trägerabschnitt 28 angeordneten Laufrollen 20a, 20b, 20c an einer jeweiligen Transportschiene 12 des Transportsystems 10 entlanglaufen, ist der Transportwagen 14 besonders kippfest in der Querrichtung Y.

Die Laufflächen 23a, 23b, 23c der Transportschiene 12 sind jeweils eben ausgestaltet, das heißt sie weisen insbesondere keine Keilform auf. Gleiches gilt für die Laufflächen der nicht-gezeigten, zweiten Transportschiene des Transportsystems 10.

Wie in der Draufsicht in Fig. 5A zu erkennen ist, bilden die Drehachsen D20a, D20b, D20c der Laufrollen 20a, 20b, 20c in der axialen Richtung Z gesehen ein gleichschenkliges Trapez, bei dem ein Abstand 44 zwischen den zwei dritten Laufrollen 20c kleiner ist als ein Abstand 46 zwischen der ersten Laufrolle 20a und der zweiten Laufrolle 20b (siehe Fig. 5B). Diese Anordnung der Laufrollen 20a, 20b, 20c machten Transportwagen 14 besonders kurvengängig.

Die Anordnung der Laufrollen 20a, 20b, 20c ist jedoch nicht auf die Trapezform beschränkt zu verstehen. Beispielsweise können insbesondere bei rein linearen Schienenwegen die Drehachsen D20a, D20b, D20c der Laufrollen 20a, 20b, 20c auch ein Rechteck, insbesondere Quadrat bilden. Ferner können die Drehachsen D20a, D20b, D20c der Laufrollen 20a, 20b, 20c in einem Fall, in dem nur eine dritte Laufrolle 20c vorgesehen ist, ein gleichschenkliges, insbesondere gleichseitiges Dreieck bilden.

In dem gezeigten Ausführungsbeispiel sind die dritten Laufrollen 20c ortsfest an dem Grundkörper 18 bzw. dem Trägerabschnitt 28 angeordnet, was den Transportwagen besonders wartungsfreundlich und langlebig macht, da weniger bewegliche Teile zum Einsatz kommen. Um Fertigungstoleranzen der Transportschiene 12 besser kompensieren zu können und den Transportwagen 14 noch kurvengängiger zu machen, kann jedoch auch zumindest eine oder mehrere der dritten Laufrollen 20c derart an dem Grundkörper 18 bzw. dem Trägerabschnitt 28 angeordnet sein, dass die dritte Drehachse D20c relativ zu dem Grundkörper 18 bzw. dem Trägerabschnitt 28 auslenkbar ist, bevorzugt im Wesentlichen nur in der Querrichtung Y. Die auslenkbare Lagerung der dritten Laufrolle 20c kann beispielsweise mittels eines Auslegers erfolgen, der sich von dem Grundkörper 18 bzw. dem Trägerabschnitt 28 erstreckt und ein elastisch wirkendes Festkörpergelenk umfasst (nicht gezeigt). Die auslenkbare Lagerung der dritten Laufrolle 20c kann aber auch mittels eines Schwenkarms erfolgen, der sich von dem Grundkörper 18 bzw. dem Trägerabschnitt 28 erstreckt und ein drehbar gelagerte Schwenkachse oder dergleichen umfasst (ebenfalls nicht gezeigt).

Wie in der Fig. 6A sowie in der vergrößerten Darstellung in Fig. 6B dargestellt ist, sind Lenkrollen 40 vorgesehen, die an einem Schwenkabschnitt 24 drehbar um eine Lenkrollenachse 42 gelagert sind. Der Schwenkabschnitt 24 wiederum ist an dem Grundkörper 18 drehbar um eine Schwenkachse 26 gelagert (siehe auch Fig. 5A). Die Lenkrollenachse 42 und die Schwenkachse 26 sind in der Querrichtung Y betrachtet seitlich versetzt zueinander angeordnet, das heißt sie kreuzen oder schneiden sich nicht. Die Lenkrollenachse 42 steht senkrecht zur Schwenkachse 26 und senkrecht zu den Drehachsen D20a, D20b, D20c der Laufrollen 20a, 20b, 20c. Die Schwenkachse 26 ist in einer Gebrauchslage des Transportwagens 14 parallel zu der axialen Richtung Z angeordnet (siehe Fig. 6B).

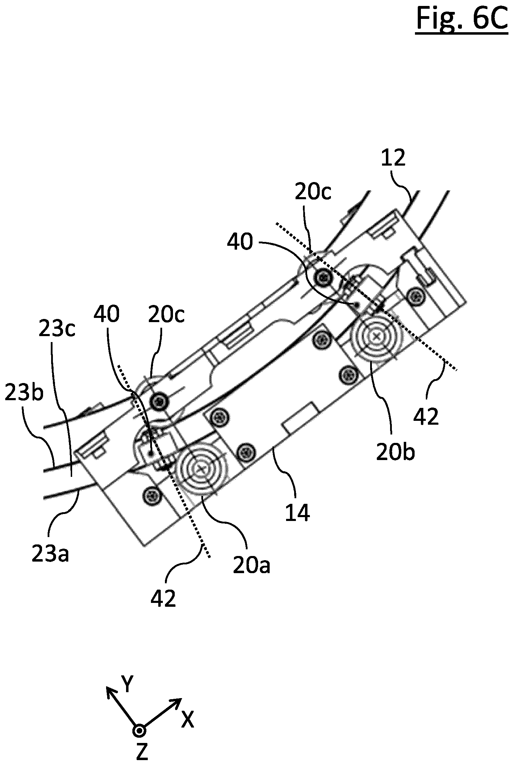

Die Lenkrollenachse 42 steht unabhängig von der aktuellen Position des Transportwagens 14 auf der Transportschiene 12, das heißt insbesondere unabhängig davon, ob sich der Transportwagen 14 gerade auf dem Abschnitt mit geradlinigen Transportweg G, dem Übergangsabschnitt U oder dem Kurvenabschnitt R befindet, immer senkrecht zu der Transportrichtung X. Mit anderen Worten richtet sich die Lenkrolle 40 entlang der Transportrichtung X aus und rollt daher im Wesentlichen gleitreibungsfrei auf der oberen, dritten Lauffläche 23c der Transportschiene 12 ab. Zur Veranschaulichung sind in der vereinfachten Detailansicht der Fig. 6C die Lenkrollenachsen 42 der Lenkrollen 40 mit gestrichelten Linien gekennzeichnet.

Die Lenkrollen 40 tragen im Wesentlichen die gesamte Gewichtslast des Wagens 14 und eines auf ihm angeordneten Produkts, ohne dabei zu verkanten bzw. schräg über die obere Lauffläche 20c zu rutschen. Der Transportwagen 14 kann daher vergleichsweise große Lasten transportieren, während er gleichzeitig hochgenau auf der Transportschiene 12 positioniert werden kann. Zudem wird der Verschließ an den Laufrollen 20a, 20b, 20c erheblich reduziert, was das Transportsystem 10 insgesamt wartungsfreundlicher, langlebiger und wirtschaftlicher macht.

Wie in der Fig. 5A gezeigt ist, sind die zwei Schwenkachsen 26 der zwei Lenkrollen 40 in Transportrichtung X zueinander beabstandet an dem Grundkörper 18 angeordnet. Ein Abstand 48 zwischen den Schwenkachsen 26 ist größer als der Abstand 44 zwischen den dritten Drehachsen D20c und der Abstand 46 zwischen der ersten und zweiten Drehachse D20a, D20b (siehe Fig. 5B). Dadurch wird die Nickneigung des Transportwagens 14 reduziert.

Des Weiteren liegen die Schwenkachsen 26 in Bezug auf die Querrichtung Y zwischen der ersten und dritten Drehachse D20a, D20c bzw. zwischen der zweiten und dritten Drehachse D20b, D20c. Zudem sind die zwei Schwenkachsen 26 äquidistant in Bezug auf die Mitte des Grundkörpers 18 angeordnet. Sie sind zudem so angeordnet, dass die Lenkrollen 40 mittig auf und der dritten Lauffläche 23c zu liegen kommen. Diese spezielle Anordnung der Schwenkachsen 26 und Drehachsen D20a, D20b, D20c macht den Transportwagen 14 besonders stabil gegen Verkippungen.

Gemäß einer nicht gezeigten Ausführungsform umfasst der Transportwagen 14 nur eine anstatt zwei Lenkrollen 40 der eingangs beschriebenen Art. Die Lenkrolle 40 ist mittig zwischen den Laufrollen 20a, 20b, 20c mittels eines Schwenkabschnitts 24 an dem Grundkörper 18 gelagert, das heißt ein Abstand zwischen der Schwenkachse 26 und der ersten Drehachse D20a ist gleich einem Abstand zwischen der Schwenkachse 26 und der zweiten Drehachse D20b.

Es ist jedoch auch eine Konfiguration möglich, bei der der Transportwagen 14 drei oder mehr Lenkrollen 40 umfasst, die entlang der Transportrichtung X verteilt an dem Grundkörper 18 angeordnet sind (z. B. äquidistant beabstandet). Diese Ausgestaltung macht den Transportwagen 14 besonders für große Lasten geeignet, da das Gewicht auf mehrere Lenkrollen 40 verteilt wird.

Gemäß einer nicht gezeigten Ausführungsform umfasst der Transportwagen 14 zusätzlich auch eine oder mehrere Lenkrollen 40 der eingangs beschriebenen Art, die an dem Trägerabschnitt 28 angeordnet sind. Diese Lenkrollen 40 können in Bezug auf die an dem Grundkörper 18 angeordneten Lenkrollen 40 gegenüberliegend oder versetzt angeordnet sein und wirken mit einer dritten Lauffläche der zweiten Transportschiene des Transportsystems 10 zusammen. Zwischen den trägerseitigen Lenkrollen 40 und den grundkörperseitigen Lenkrolleneinheit 40 kann eine Vorspannung bestehen, was zusätzliche Stabilität bietet.

Wie besonders gut in den Fig. 2 bis 4 zu erkennen ist, umfasst der Transportwagen 14 des Weiteren ein Führungselement 30, das mit der unteren, vierten Lauffläche 23d der Transportschiene 12 zusammenwirkt (siehe Fig. 1A). Das Führungselement 30 ist in der axialen Richtung Z gesehen mittig zwischen den zwei Schwenkachsen 26 der zwei Lenkrolleneinheiten and dem Trägerabschnitt 28 angeordnet.

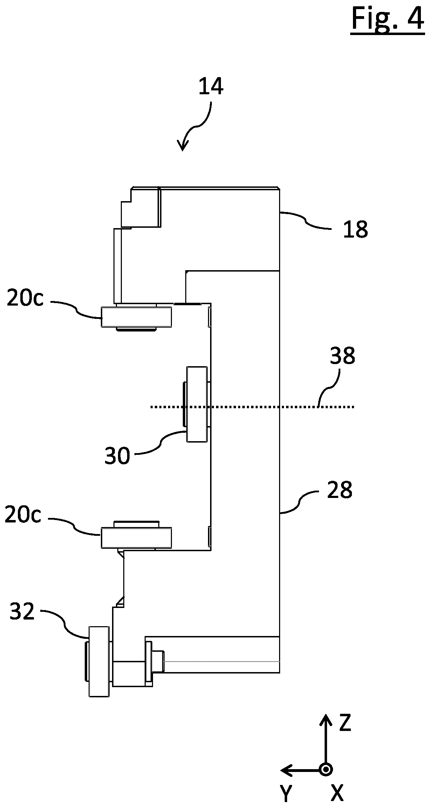

In dem gezeigten Ausführungsbeispiel ist das Führungselement 30 als eine drehbar an dem Trägerabschnitt 28 gelagerte Rolle ausgebildet, deren Rotationsachse 38 parallel zu der Lenkrollenachse 42 angeordnet ist (siehe Fig. 4).

Ferner ist das Führungselement 30 derart an dem Trägerabschnitt 28 angeordnet, dass es mit einer Vorspannung an die vierte Lauffläche 23d gedrückt wird. Mit anderen Worten ist die Transportschiene 12 zwischen den Lenkrollen 40 und dem Führungselement 30 eingeklemmt. Das Führungselement 30 wirkt daher wie eine Art Gegendruckelement, das die Rollbewegung der Lenkrollen 40 auf der dritten Lauffläche 23c stabilisiert. Dadurch wird ein stabiler Sitz des Transportwagens 14 auf der Transportschiene 12 gewährleistet, insbesondere auch bei großen Längsbeschleunigungsraten und/oder geringen Lasten. Der Betrag der Vorspannung kann bedarfsgerecht gewählt werden, um einen optimalen Sitz des Transportwagens 14 zu gewährleisten. Durch die Ausgestaltung als Rolle wirkt das Führungselement 30 besonders verschleißarm mit der vierten Lauffläche 23d zusammen. Außerdem wird wenig Energie zum Verfahren des Transportwagens 14 benötigt.

Das Führungselement 30 kann aber auch als ein Führungsschlitten ausgebildet sein, der vorgespannt mit der vierten Lauffläche 23d zusammenwirkt (nicht gezeigt). Die Oberfläche des Führungsschlittens kann besonders glatt und/oder geschmiert sein, um die Gleitreibung zwischen dem Führungsschlitten und der vierten Lauffläche 23d zu reduzieren. Eine solche Ausgestaltung macht den Transportwagen 14 weniger komplex.

Der Transportwagen 14 kann, zusätzlich zu dem mit der vierten Lauffläche 23d der Transportschiene 12 zusammenwirkenden Führungselement 30, zumindest ein mit einer vierten Lauffläche der zweiten Transportschiene des Transportsystems 10 zusammenwirkendes Führungselement umfassen.

Ferner versteht es sich, dass die Breiten der Rollen 20a, 20b, 20c, 30, 40 und die Breiten der Laufflächen 23a, 23b, 23c, 23d aufeinander abgestimmt sind.

Die beschriebenen Anordnungen und Ausgestaltungen der Laufrollen 20a, 20b, 20c, der Lenkrollen 40 und des Führungselements 30 sowie deren Anzahl können beliebig kombiniert werden.

Das erfindungsgemäße Zusammenspiel aus seitlichen Laufrollen 20a, 20b, 20c und Lenkrollen 40 bietet mehrere Vorteile. Die Last des Transportwagens 14 wird reibungsarm durch die in Transportrichtung X nachlaufenden und sich selbst ausrichtenden Lenkrollen 40 aufgenommen. Dadurch können die seitlichen Laufrollen 20a, 20b, 20c störungsfrei für eine hochpräzise Positionierung des Transportwagens 14 in der Querrichtung Y sorgen. Durch eine optionale Vorspannung - bereitgestellt z.B. durch ein entsprechendes Führungselement 30 und/oder zusätzliche, axial vorgespannte Lenkrollen 40 - arbeiten die Lenkrollen 40 schlupffrei mit der dritten Lauffläche 23c zusammen, da sie nicht nur durch die Last, sondern auch durch die von dem Führungselement 30 bereitgestellte Vorspannung an die dritte Lauffläche 23c gedrückt werden. Dies kann insbesondere bei Leerfahren des Transportwagens 14 vorteilhaft sein. Zudem wird - gegenüber herkömmlichen Systemen - die Anzahl an beweglichen Teilen erheblich reduziert, was das Transportsystem insgesamt wirtschaftlicher und robuster macht.

### Bezugszeichenliste:

- 10: Transportsystem
- 12: Transportschiene
- 14: Transportwagen
- 18: Grundkörper
- 20a-20c: Laufrollen
- D20a-D20c: Drehachsen
- 23a-23c: Laufflächen
- 24: Schwenkabschnitt
- 26: Schwenkachse
- 28: Trägerabschnitt
- 30: Führungselement
- 32: Antriebsrollen
- 38: Rotationsachse
- 40: Lenkrolle
- 42: Lenkrollenachse
- 44, 46: Abstände der Drehachsen
- 48: Abstand der Schwenkachsen
- X: Transportrichtung
- Y: Querrichtung
- Z: axiale Richtung
- G: Abschnitt mit geradlinigen Transportweg
- U: Übergangsabschnitt
- R: Kurvenabschnitt

## Patentansprüche

1. Transportsystem (10) zum Transport von Objekten umfassend:
zumindest eine Transportschiene (12), die zumindest eine erste Lauffläche (23a), zumindest eine zweite Lauffläche (23b) und zumindest eine dritte Lauffläche (23c) umfasst, wobei die erste Lauffläche (23a) und die zweite Lauffläche (23b) einander gegenüberliegend angeordnet sind, wobei sich die dritte Lauffläche (23c) senkrecht zu und zwischen der ersten und der zweiten Lauffläche (23a, 23b) erstreckt und eine Flächennormale der dritten Lauffläche (23c) eine axiale Richtung (Z) definiert; und
zumindest einen Transportwagen (14) umfassend:
einen Grundkörper (18), der mit einem Objektträger zur Aufnahme zumindest eines zu transportierenden Objekts gekoppelt oder koppelbar ist,
zumindest eine Laufrolleneinheit mit zumindest einer um eine erste Drehachse (D20a) drehbar gelagerten ersten Laufrolle (20a), zumindest einer um eine zweite Drehachse (D20b) drehbar gelagerten zweiten Laufrolle (20b) und zumindest einer um eine dritte Drehachse (D20c) drehbar gelagerten dritten Laufrolle (20c), wobei die erste und die zweite Laufrolle (20a, 20b) derart an dem Grundkörper (18) angeordnet sind, dass die erste und die zweite Drehachse (D20a, D20b) relativ zu dem Grundkörper (18) ortsfest sind und dass sie mit der ersten Lauffläche (23a) zusammenwirken, wobei die dritte Laufrolle (20c) derart an dem Grundkörper (18) angeordnet ist, dass sie mit der zweiten Lauffläche (23b) zusammenwirkt, und
zumindest eine Lenkrolleneinheit mit zumindest einer Lenkrolle (40) und zumindest einem Schwenkabschnitt (24), wobei der Schwenkabschnitt (24) an dem Grundkörper (18) drehbar um eine Schwenkachse (26) gelagert ist, wobei die Lenkrolle (40) an dem Schwenkabschnitt (24) drehbar um eine Lenkrollenachse (42) gelagert ist und mit der dritten Lauffläche (23c) zusammenwirkt, wobei sich die Lenkrollenachse (42) und die Schwenkachse (26) nicht kreuzen.

2. Transportsystem (10) nach Anspruch 1,
wobei die Lenkrollenachse (42) senkrecht zu der Schwenkachse (26) steht und/oder wobei die Lenkrollenachse (42) senkrecht zu der ersten, der zweiten und/oder der dritten Drehachse (D20a, D20b, D20c) steht.

3. Transportsystem (10) nach Anspruch 1 oder 2,
wobei die Schwenkachse (26) in einer Gebrauchslage des Transportwagens (14) parallel zu der axialen Richtung (Z) angeordnet ist.

4. Transportsystem (10) nach zumindest einem der vorherigen Ansprüche, wobei die erste, die zweite und/oder die dritte Drehachse (D20a, D20b, D20c) parallel zu der axialen Richtung (Z) angeordnet ist.

5. Transportsystem (10) nach zumindest einem der vorherigen Ansprüche, wobei die dritte Laufrolle (20c) derart an dem Grundkörper (18) angeordnet ist, dass die dritte Drehachse (D20c) relativ zu dem Grundkörper (18) ortsfest ist.

6. Transportsystem (10) nach zumindest einem der Ansprüche 1 bis 4, wobei die dritte Laufrolle (20c) derart an dem Grundkörper (18) angeordnet ist, dass die dritte Drehachse (D20c) relativ zu dem Grundkörper (18) auslenkbar ist, insbesondere in einer Richtung (Y) senkrecht zu der axialen Richtung (Z) und senkrecht zu einer Transportrichtung (X) des Transportwagens (14),
insbesondere wobei die Laufrolleneinheit zwei dritte Laufrollen (20c) umfasst, die um jeweilige dritte Drehachsen (D20c) drehbar an dem Grundkörper (18) gelagert sind und mit der dritten Lauffläche (23c) zusammenwirken.

7. Transportsystem (10) nach Anspruch 6,
wobei die erste, die zweite und die zwei dritten Drehachsen (D20a, D20b, D20c) in der axialen Richtung (Z) gesehen ein Trapez, insbesondere ein gleichschenkliges Trapez, bilden,
insbesondere wobei ein Abstand (44) zwischen den zwei dritten Laufrollen (20c) kleiner ist als ein Abstand (46) zwischen der ersten Laufrolle (20a) und der zweiten Laufrolle (20b).

8. Transportsystem (10) nach zumindest einem der vorherigen Ansprüche, wobei der Transportwagen (14) zwei in Transportrichtung (X) zueinander beabstandet angeordnete Lenkrolleneinheiten umfasst, die jeweils eine Lenkrolle (40) und jeweils einen Schwenkabschnitt (24) umfassen, wobei jeder der zwei Schwenkabschnitte (24) drehbar um eine jeweilige Schwenkachse (26) an dem Grundkörper (18) gelagert ist und jede der zwei Lenkrollen (40) drehbar um eine jeweilige Lenkrollenachse (42) an dem jeweiligen Schwenkabschnitt (24) gelagert ist, wobei sich die jeweiligen Lenkrollenachsen (42) und Schwenkachsen (26) nicht kreuzen,
insbesondere wobei ein Abstand zwischen den beiden Schwenkachsen (26) der beiden Schwenkabschnitte (24) größer ist als ein Abstand zwischen der ersten Drehachse (D20a) und der zweiten Drehachse (D20b).

9. Transportsystem (10) nach zumindest einem der vorherigen Ansprüche, ferner umfassend einen Trägerabschnitt (28), der sich von dem Grundkörper (18) in der axialen Richtung (Z) erstreckt, insbesondere wobei der Trägerabschnitt (28) und der Grundkörper (18) einstückig ausgebildet sind oder separate Bauteile sind.

10. Transportsystem (10) nach Anspruch 9,
wobei der Transportwagen (14) zusätzlich zu der zumindest einen an dem Grundkörper (18) angeordnete Laufrolleneinheit zumindest eine an dem Trägerabschnitt (28) angeordnete Laufrolleneinheit umfasst,
wobei erste und zweite Laufrollen der an dem Trägerabschnitt (28) angeordneten Laufrolleneinheit mit ersten und zweiten Laufflächen einer zweiten Transportschiene des Transportsystems (10) zusammenwirken.

11. Transportsystem (10) nach Anspruch 9 oder 10,
wobei der Transportwagen (14) zusätzlich zu der zumindest einen an dem Grundkörper (18) angeordneten Lenkrolleneinheit zumindest eine an dem Trägerabschnitt (28) angeordnete Lenkrolleneinheit umfasst, insbesondere wobei die Lenkrolleneinheit mit einer zweiten Transportschiene zusammenwirkt.

12. Transportsystem (10) nach Anspruch 10 oder 11,
wobei an dem Trägerabschnitt (28) zumindest ein Führungselement (30) angeordnet ist, das mit einer vierten Lauffläche (23d) der Transportschiene (12) zusammenwirkt, wobei die vierte Lauffläche (23d) der dritten Lauffläche (23c) gegenüberliegt, insbesondere wobei das Führungselement (30) derart an dem Trägerabschnitt (28) angeordnet ist, dass das Führungselement (30) mit einer Vorspannung an die vierte Lauffläche (23d) gedrückt wird.

13. Transportsystem (10) nach Anspruch 12, soweit diese abhängig von Anspruch 8 sind,
wobei das Führungselement (30) in der axialen Richtung (Z) gesehen mittig zwischen den zwei Schwenkachsen (26) der zwei Lenkrolleneinheiten angeordnet ist.

14. Transportsystem (10) nach zumindest einem der Ansprüche 11 bis 13, wobei das Führungselement (30) eine drehbar an dem Trägerabschnitt (28) gelagerte Rolle ist, wobei eine Rotationsachse (38) der Rolle parallel zu der Lenkrollenachse (42) angeordnet ist.

15. Transportsystem (10) nach zumindest einem der vorherigen Ansprüche, wobei die Transportschiene (12) in Transportrichtung (X) gesehen eine rechteckige Querschnittsform aufweist.
